Europäisches Patentamt

European Patent Office

Office européen des brevets

(11) Publication number: **0 270 047 B1**

(12) **EUROPEAN PATENT SPECIFICATION**

(45) Date of publication of patent specification: **29.01.92**　(51) Int. Cl.⁵: **B29D 31/00**, B29C 45/16, A43B 9/00

(21) Application number: **87117639.2**

(22) Date of filing: **28.11.87**

(54) Process and apparatus for manufacturing footwear with soles in vulcanized rubber and intersoles in thermoplastic material.

(30) Priority: **05.12.86 IT 4163686**

(43) Date of publication of application:
**08.06.88 Bulletin 88/23**

(45) Publication of the grant of the patent:
**29.01.92 Bulletin 92/05**

(84) Designated Contracting States:
**DE ES FR IT**

(56) References cited:
**DE-A- 3 502 591**　　**FR-A- 2 199 641**
**FR-A- 2 248 800**　　**GB-A- 2 174 952**
**GB-A- 2 184 638**　　**GB-B- 1 435 837**

(73) Proprietor: **MAIN GROUP S.p.A.**
**Piazzetta Sartori 17**
**I-35137 Padova(IT)**

(72) Inventor: **Ferniani, Aldo**
**Via Miani 29**
**I-35100 Padova(IT)**

(74) Representative: **Modiano, Guido et al**
**MODIANO, JOSIF, PISANTY & STAUB**
**Modiano & Associati Via Meravigli, 16**
**I-20123 Milano(IT)**

Rank Xerox (UK) Business Services

## Description

The present invention relates to a process and to an apparatus for manufacturing footwear with soles in vulcanized rubber and intersole in two-component polyurethane or foamed thermoplastic material.

Usually, the manufacture of footwear with vulcanized rubber soles is discontinuous. Soles are separately molded in vulcanized rubber by means of multiple-plane compression presses or of injection presses, for example of the carrousel type, wherein each mold-holder is provided with means adapted to withstand the high pressure in the injection step.

The soles thus manufactured are chemically treated on the surface to be glued to the polyurethane or to the foamed thermoplastic material and are then stored until the time of use.

An upper is separately prepared, and during a subsequent step the sole is placed as an insert on a mold together with the lower part of the upper, and then a two-component polyurethane or a foamed thermoplastic material is injected which joins the two parts and generates an intersole.

This discontinuous system entails the use of a plurality of very expensive machines which separately produce the tread and subsequently perform the completion of the product.

This means not to work continuously and to have to resume several times the semi-worked items for the obtainment of the final product, with the need of skilled labour.

A further known footwear manufacture method and apparatus is disclosed in British Patent Application No. 2 174 952. The known method provides for steps, for molding soles on an upper shoe, including : injecting vulcanizable rubber in a first mold to form a tread sole, keeping said first mold closed for the vulcanisation time, transporting the tread sole to a second mold, and injection, in said second mold, of an intermediate polyurethane sole. The British publication however, fails to provide for a continuous method or for corresponding means to perform such a method.

An other known mold is disclosed by FR-A-2 248 800, which shows a conventional mold including a rotating table adapted to transfer a molded sole to several processing stations. However, said French document also fails to provide for a continuously working apparatus (or for a corresponding method) if used to manufacture vulcanised rubber soles.

Accordingly, the aim of the present invention is to provide a process and an apparatus which provides automatically an item of footwear with vulcanised rubber sole combined with an intersole in injected or foamed material.

A consequent primary object is to provide a sequence of operations mutually interlinked so as to distribute the times for the individual treatments.

Still another object is to provide an apparatus which allows to obtain vulcanised soles and to prepare them with chemical products and to provide an intersole for connecting the tread and the upper.

A further object is to provide a fully automatic apparatus where the presence of operators is required only for checking and extracting the finished product.

This aim, as well as these and other objects which will become apparent hereinafter, are achieved by a process for manufacturing footwear with soles in vulcanized rubber and intersoles in thermoplastic material or a two-component polyurethane material, using an apparatus with a rotating table, comprising the steps as defined in claim 1.

The process can be performed on an apparatus for manufacturing footwear with soles and intersoles as defined in claim 8.

Further characteristics and advantages of the invention will become apparent from the detailed description of a preferred embodiment of an apparatus, according to the invention, given by way of non-limitative example and illustrated in the accompanying drawings, wherein:

fig. 1 is a top plan view of the apparatus according to the invention;

fig. 2 is a lateral view of the apparatus according to the invention, illustrating in particular the rubber injection assembly;

fig. 3 is a front view of one of the molding stations provided on the rotating table.

With reference to the above described figures, the apparatus is first described and subsequently, in describing its operation, the treatment process will be described.

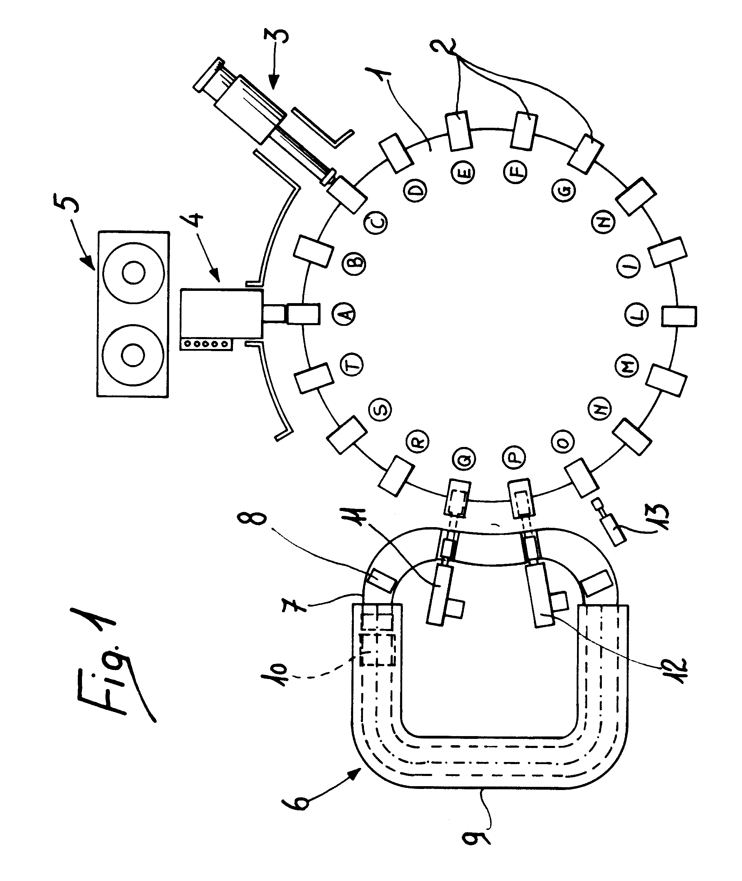

The apparatus is substantially composed of a rotating table 1 which peripherally supports a plurality of stations 2 which, in fig. 1, are indicated with progressive letters from A to T.

Fig. 1 also illustrates the assembly 3 for the injection of vulcanizable rubber and the assembly 4 for the injection of a two-component polyurethane or in any case of a foaming material, having a pair of containers 5 for the chemical components.

Said assembly can be replaced with another one suitable for the treatment of foamed thermoplastic materials.

An external carrousel 6 comprises a conveyor chain 7 provided with a plurality of resting trays 8 equal in number to the stations 2.

A partially heated tunnel 9, containing the conveyor chain 7, is provided in said carrousel 6.

A treatment unit 10 is provided inside said tunnel, in which a primer is sprayed on the soles to be placed in the trays 8.

Said carrousel 6 is combined with an extraction manipulator 11 which, as will become apparent hereinafter, extracts the sole from the mold, placing it on one of the trays 8.

Said carrousel 6 is furthermore combined with an insertion manipulator 12 which returns the treated sole, as will be described hereinafter, to a station of the rotating table 1.

Fig. 1 also indicatively illustrates a riser extractor (13) arranged at station 0.

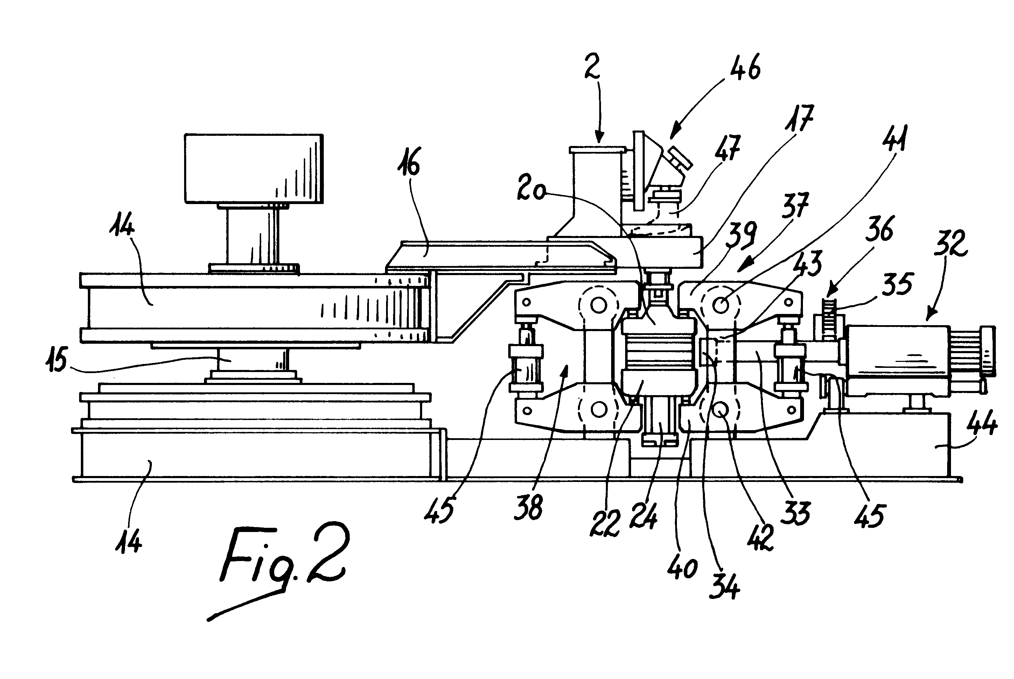

As illustrated in Fig. 2, a basement 14 of the rotating part supports, by means of a central axis 15, the rotating table 1 which supports the mold-holders by means of ledges 16.

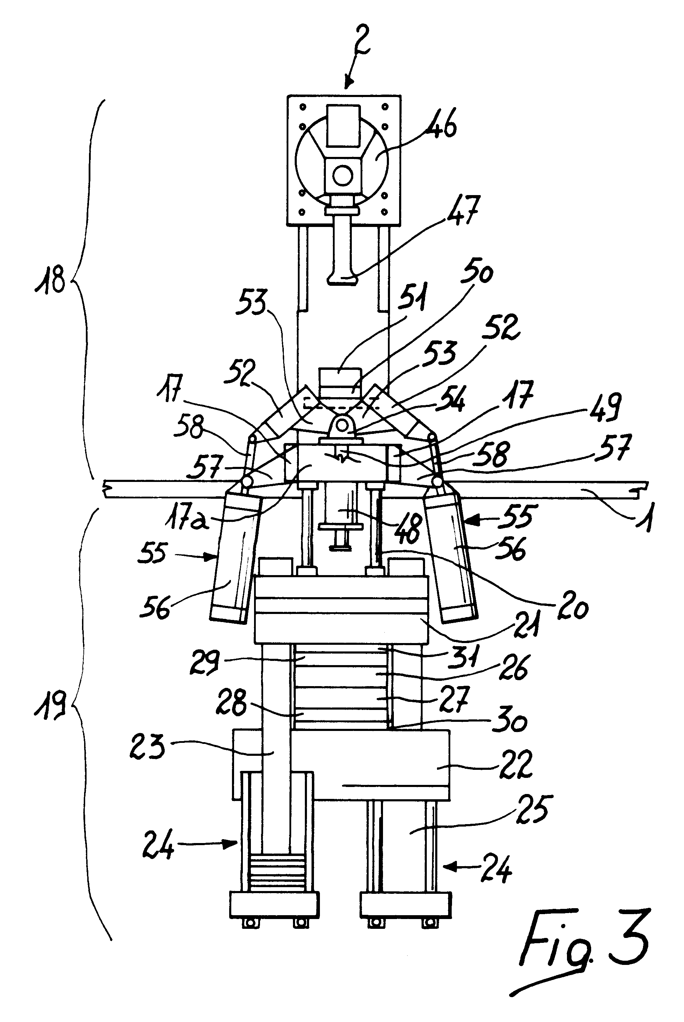

A pair of plates 17, rigidly associated with the ledge 16 is provided in each station, and upwardly supports, as is more clearly illustrated in fig. 3, a section 18 for molding the two-component polyurethane or of the foamed thermoplastic material and downwardly supports a section 19 for molding the vulcanized rubber.

The lower section 19 for molding the vulcanized rubber is suspended from the plate 17 by means of two further vertical supporting plates 20 upwardly rigidly associated with the lower face of the plates 17 and downwardly connected to the upper mold-holder plate 21 of the section 19 for injecting the vulcanized rubber.

A lower mold-holder plate 22 is connected to the upper mold-holder plate 21 by means of the stems 23 of two closure pistons 24 the cylindrical body 25 whereof is rigidly associated with said lower mold-holder plate 22.

The stems thus also act as connecting columns between the upper mold-holder plate 21 and the lower mold-holder plate 22.

Two half-molds, respectively 26 and 27, containing the matrix of the trend to be produced in vulcanized rubber, are contained between said two plates, the upper one 21 and the lower one 22.

Two heating elements, respectively 28 and 29, are provided adjacent to said two half-molds 26 and 27 and allow to generate and maintain the required vulcanization temperatures in the half-molds 26 and 27.

In order to avoid the dispersion of heat between said heating elements 28 and 29 and respectively the upper mold-holder plate 21 and the lower mold-holder plate 22, two thermally insulating elements, indicated by 30 and 31, are provided.

The two closure pistons 24 develop a force which is sufficient to keep the half-molds 26 and 27 closed during the vulcanization step but, for the sake of economy of space and dimensions, they are not capable of developing a force sufficient to react to the thrust generated by the injection of the vulcanizable rubber.

The injection assembly 3 is composed of a motor assembly 32 which drives an injection screw feeder 33 ending with an injector nozzle 34 and is fed with a strip of rubber 35 unwound from a reel 36. At the injection assembly 3 a clamp press is provided constituted by a first closure clamp 37 and by a second identical closure clamp 38, each comprising a pair of jaws respectively 39 and 40 supported by means of pivots 41 and 42 by a support 43 rigidly associated with the base 44 of the injection assembly.

Said jaws are pivoted in a non-middle point of their length so that the arms of the part where they act on the mold are shorter than those of the opposite part where a closure piston 45 acts therebetween.

The jaws of these clamps have an extremely limited motion and the closure piston provides the auxiliary force sufficient to keep the half-molds 26 and 27 closed during the injection of the vulcanizable rubber.

Upwardly, the section 18 of the two-component polyurethane or of the foamed thermoplastic material is composed of a form-turning turret 46 which supports a pair of forms 47 on which an upper is inserted.

A positioning piston 48 is furthermore provided rigidly associated with the base of the intersole mold-holder 17a, and at the end of its stem 49 a thermostat-fitted plate 50 is fitted whereon a male half-mold 51 is fixed, on which the tread sole is inserted.

To complete this mold section for polyurethane 18, two half-rings 52 are furthermore provided which are pivoted by means of a tab 53 thereof on a bracket 54 rigidly associated with the mold-holder base and which are each operated by means of a piston 55 the body 56 whereof is pivoted in a further bracket 57 derived from the plate 17, its stem 58 being pivoted on the respective half-ring 52.

The simultaneous actuation of the two pistons 56 after the insertion of the form 47 entails the closure of the mold of the section 18 for the two-component polyurethane or for the foamed thermoplastic material.

The process executed by the apparatus schematically described begins, with reference to fig. 1, at station C where the vulcanizable rubber is injected by means of the injection assembly 3.

After injecting the rubber with the closure clamps 37 closed, the table rotates step by step and only the pistons 24 maintain the half-molds 26 and 27 closed for the entire time required for vulcanization.

As the table 1 gradually rotates, vulcanizable rubber in injected in all the subsequent stations in the lower mold section 19.

When the first station where the injection has occurred, and subsequently when all the other successive stations have also reached position Q, the extractor 13 extracts the sole; after the arrival at the station 9 the manipulator 11 extracts the tread sole which is now vulcanized and places it on one of the trays indicated by 8 and mounted on the conveyor chain 7.

The number of these trays 8 is identical to the number of the stations of the machine and the movement of the chain 7 in the carrousel 6 is synchronized with the movement of the rotating table 1.

The tread sole, the cycle whereof is now followed, advances in the carrousel 6 where its upper face, which will be subsequently connected to the two-component polyurethane or to the foamed thermopalstic material, is treated with a primer, being subsequently kept at an adequate temperature.

After a substantially complete turn of the carrousel 6, the vulcanized tread sole prepared with the primer is located in front of the position P of the rotating table where the manipulator 12 picks it up and inserts it in the half-mold 51 of the section 18 of the two-component polyurethane or of the foamed thermoplastic material.

The tread sole now continues its movement with the rotating table 1 until, arriving at station A, the injection of the two-component polyurethane or of the foamed thermoplastic material occurs, providing an intersole between the tread and the upper which is carried by the form 47.

After this operation the upper mold 18 continues in closed condition up to position M at which it opens and the operator extracts the finished footwear.

In ordinary running conditions the apparatus operates in a fully automatic manner; each step of the rotating table 1 is matched by the extraction of a finished item of footwear in position M.

The tread soles are only temporarily kept in the carrousel 6 where they undergo the preparation treatment which, being made at a time which immediately precedes the injection of the polyurethane, requires no reactivations or other processes.

For the treatment of the sole a compound has been covneniently provided having the following composition:

chlorinated polymers 25%
ester-based solvent 65%
isocyanate 10%.

With this compound a preparation of the surface is obtained having the required polar bonds and an excess isocyanate required is introduced locally for the glueing of the two different materials.

This compound is compatible with the timings of the cycle since it would not be usable with long intervals between the treatment and the injection of the polyurethane since due to the high affinity of isocyanate for water and therefore for atmospheric humidity it would have to undergo subsequent treatments before use.

From what has been described and illustrated it can thus be seen that all the proposed aims have been achieved and that in particular an automatic and continuous process has been provided for manufacturing footwear with tread soles in vulcanised rubber, intersoles in two-component polyurethane or foamed thermoplastic material directly associable with an upper.

The process is executed with a fully automatic apparatus which requires, for its advantageous use, personnel only for checking and extracting the finished product.

The scope of protection is defined in the claims and not restricted to the given examples.

Where technical features mentioned in any claim are followed by reference signs, those reference signs have been included just for the sole purpose of increasing intelligibility of the claims and accordingly, such reference signs do not have any limiting effect on the scope of each element identified by way of example by such reference signs.

## Claims

1. Process for manufacturing footwear with soles in vulcanised rubber and intersoles in thermoplastic material or a two-component polyurethane material, using an apparatus with a rotating table, comprising the following steps :

   a) injecting vulcanizable rubber in a first mold under a high-pressure press;

   b) keeping said first mold closed for the vulcanization time;

   c) opening said first mold, extracting the sole and treating it, in an auxiliary carrousel, with a primer so as to perform the step of priming and to prepare it for subsequent glueing;

   d) inserting the sole in a second mold having a form with an upper inserted thereon;

   e) injecting said thermoplastic material or said two-component material in said second mold;

   f) keeping said second mold closed for the reaction time of the two component polyurethane material or for the cooling time of said thermoplastic material;

   wherein the step of injecting vulcanizable rubber in the first mold, the step of priming on the auxiliary carrousel and the step of injecting the thermoplastic material or the two-component polyurethane material at the second mold occur at each step of advancement of the rotating table.

2. Process according to claim 1, characterized in that the vulcanisation time is determined by a preset number of step by step advancements of the rotating table.

3. Process according to claim 1, characterized in that the step of priming occurs on the upper face of said sole.

4. Process according to claim 3, characterized in that said primer comprises:
chlorinated polymers 25%
ester-based solvent 65%
isocyanate 10%.

5. Process according to claim 1, characterized in that said sole treated with said primer is kept within a heated tunnel until it is inserted in the second mold before receiving the two-component polyurethane or the expandable thermoplastic material which will constitute the intersole.

6. Process, according to claim 1, characterized in that said thermoplastic material is a two component polyurethane.

7. Process, according to claim 1, characterized in that said thermoplastic material is a foamed thermoplastic material.

8. Apparatus for manufacturing footwear with soles and intersoles comprising :
    a) a rotating table (1) having at its periphery a plurality of stations (2),
    b) a first assembly (3) for injecting a material to form the soles, and
    c) a second assembly (4) for injecting a thermoplastic material to form the intersoles characterized in that said rotating table is supporting, at its periphery, said plurality of stations (2), wherein each station (2) of said plurality of stations comprises :
    - a lower section (19) for treating vulcanized rubber, said lower section (19) including mold means (26,27) provided with opening and closing means (24), with said first assembly (3) being adapted for injecting vulcanizable rubber into said mold means (26,27) to form said soles; and
    - an upper section (18) for treating thermoplastic material, said upper section (18) including further mold means (51) and further opening and closing means (55,56), with said second assembly (4) being adapted for injecting the thermoplastic material into said further mold means (51) to form said intersoles;
and in that a carrousel (6) is arranged externally to the rotation table (1) for the temporary retention of said sole, wherein said carrousel comprises :
    - a manipulator (12) for extracting said sole from the mold means (26,27) of said lower section (19) and a manipulator (11) for the insertion of said rubber sole in the further mold means (51) of said upper section (18).

9. Apparatus according to claim 8, characterized in that each of said stations (2) associated with said rotating table (1) comprises a pair of plates (17) supporting, in their upper part, said upper section (18) for injecting said thermoplastic material and in the lower part said lower section (19) for injecting vulcanizable rubber.

10. Apparatus according to claim 8, characterized in that said upper section (18) for treating said thermoplastic material comprises a sole-holder mold (17a), where said sole in vulcanised rubber is positioned, a pair of openable rings (52) and a form (47) bearing an upper.

11. Apparatus according to claim 8, characterized in that said mold means (51) include a half-mold (51) adapted to contain said sole, whereat said sole is mounted on the stem (49) of a piston (48) aligned with said upper-bearing form (47), said piston (48) determining the exact positioning of said half-mold (51) with said sole.

12. Apparatus according to claim 9, characterized in that said lower section (19) for treating said vulcanizable rubber comprises an upper mold-holder plate (21) rigidly associated with said supporting plate (17), with said upper mold-holder plate (21) there being associated the stems (23) of two pistons (24) the body whereof is rigidly associated with a lower mold-holder plate (22), said stems (23) also acting as guiding columns in the motion.

13. Apparatus according to claim 12, characterized in that between the upper mold-holder (21) and the lower mold-holder (22) two half-molds (26,27) are inserted for the forming of said sole, heating elements (28,29) and plate-like insulating elements (30,31) being adjacently inserted between said half-molds (26,27) and the respective moldholders (21,22).

**14.** Apparatus according to one or more of the preceding, claims, characterized in that at the first assembly (3) for injecting vulcanizable rubber which comprises a motorized screw feeder (33) which processes a rubber strip (35), a pair of clamps (37,38) is provided which acts between the upper mold-holder plate (21) and the lower mold-holder plate (22), said pair of clamps (37,38) being actuated by adequately powerful pistons (24) adapted to develop a sufficient closure force adapted to react to the pressures generated by injecting the vulcanizable rubber.

**15.** Apparatus according to claim 8, characterized in that said carrousel (6) is provided adjacent to said rotating table (1), and in a position substantially opposite to that of the first assembly (3) of the vulcanizable rubber, said carrousel (6) comprising a mechanized chain (7) which supports a plurality of resting trays (8) for the vulcanized soles, the number of said trays (8) being identical to the number of stations (2) of said machine, the speed of movement of said trays (8) being synchronous with the movement of the rotating table (1).

**16.** Apparatus according to claim 15, characterized in that said chain (7) is at least partially inserted within a heated tunnel (9), in a section of said tunnel (9) there being provided a treatment unit (10) for the application of a primer on the upper face of the sole.

**17.** Apparatus according to claim 8, characterized in that between said carrousel (6) and said rotating table (1) two manipulators are provided, one first manipulator (11) provided with an arm and with means adapted to extract the vulcanized sole from the preparation mold and a second manipulator (12) adapted to reinsert the sole treated with said primer in the upper mold section (18) before injecting said thermoplastic material.

**Revendications**

**1.** Procédé pour la fabrication de chaussures à semelles en caoutchouc vulcanisé et à semelles intermédiaires en matière thermoplastique ou en polyuréthane à deux composants, utilisant un appareil à table rotative, comprenant les opérations suivantes :

(a) injection de caoutchouc vulcanisable dans un premier moule sous une presse à haute pression ;

(b) maintien dudit premier moule fermé pendant la durée de vulcanisation ;

(c) ouverture dudit premier moule, extraction de la semelle et traitement de celle-ci, dans un carrousel auxiliaire, avec un apprêt de façon à effectuer l'apprêtage et à préparer la semelle pour un collage subséquent ;

(d) insertion de la semelle dans un deuxième moule comportant une forme sur laquelle est insérée une empeigne ;

(e) injection de ladite matière thermoplastique ou de ladite matière à deux composants dans ledit deuxième moule ;

(f) maintien dudit deuxième moule fermé pendant le temps de réaction du polyuréthane à deux composants ou pendant le temps de refroidissement de ladite matière thermoplastique ;

dans lequel l'opération d'injection de caoutchouc vulcanisable dans le premier moule, l'opération d'apprêtage sur le carrousel auxiliaire et l'opération d'injection de la matière thermoplastique ou du polyuréthane à deux composants dans le deuxième moule ont lieu à chaque avance d'un pas de la table rotative.

**2.** Procédé suivant la revendication 1, caractérisé en ce que la durée de vulcanisation est déterminée par un nombre préréglé d'avances pas à pas de la table rotative.

**3.** Procédé suivant la revendication 1, caractérisé en ce que l'opération d'apprêtage est effectuée sur la face supérieure de ladite semelle.

**4.** Procédé suivant la revendication 3, caractérisé en ce que ledit apprêt comprend : 25% de polymères chlorés, 65% de solvant à based'ester et 10% d'isocyanate.

**5.** Procédé suivant la revendication 1, caractérisé en ce que ladite semelle traitée avec ledit apprêt est maintenue dans un tunnel chauffé, jusqu'à ce qu'elle soit insérée dans le deuxième moule avant de recevoir le polyuréthane à deux composants ou la matière thermoplastique expansible qui constituera la semelle intermédiaire.

**6.** Procédé suivant la revendication 1, caractérisé en ce que ladite matière thermoplastique est un polyuréthane à deux composants.

**7.** Procédé suivant la revendication 1, caractérisé en ce que ladite matière thermoplastique est une matière thermoplastique en mousse.

**8.** Appareil pour la fabrication des chaussures à semelles de marche et semelles intermédiaires, comprenant :

(a) une table rotative (1) comportant, à sa périphérie, une pluralité de stations (2),

(b) un premier dispositif (3) pour injecter une matière afin de former les semelles, et

(c) un deuxième dispositif (4) pour injecter une matière thermoplastique afin de former les semelles intermédiaires,

caractérisé en ce que ladite table rotative supporte, à sa périphérie, ladite pluralité de stations (2) et chaque station (2) de ladite pluralité de stations comprend :

un mécanisme inférieur (19) pour le traitement du caoutchouc vulcanisé, ledit mécanisme inférieur (19) comportant des moyens de moulage (26,27) pourvus de moyens d'ouverture et de fermeture (24), ledit premier dispositif (3) étant prévu pour injecter du caoutchouc vulcanisable dans lesdits moyens de moulage (26,27) afin de former lesdites semelles ; et

un mécanisme supérieur (18) pour traiter la matière thermoplastique, ledit mécanisme supérieur (18) comportant d'autres moyens de moulage (51) et d'autres moyens d'ouverture et de fermeture (55,56) , ledit deuxième dispositif (4) étant prévu pour injecter la matière thermoplastique dans lesdits autres moyens de moulage (51) afin de former lesdites semelles intermédiaires ; et en ce qu'un carrousel (6) est disposé à l'extérieur de la table rotative (1) pour la rétention temporaire de ladite semelle, ledit carrousel comprenant :

un manipulateur (11) pour extraire ladite semelle des moyens de moulage (26,27) dudit mécanisme inférieur (19) et un manipulateur (12) pour l'insertion de ladite semelle en caoutchouc dans lesdits autres moyens de moulage (51) dudit mécanisme supérieur (18).

9. Appareil suivant la revendication 8, caractérisé en ce que chacune desdites stations (2) associées à ladite table rotative (1) comprend une paire de plaques (17) supportant, dans leur partie supérieure, ledit mécanisme supérieur (18) pour l'injection de ladite matière thermoplastique et, dans leur partie inférieure, ledit mécanisme inférieur (19) pour l'injection de caoutchouc vulcanisable.

10. Appareil suivant la revendication 8, caractérisé en ce que ledit mécanisme supérieur (18) pour traiter ladite matière thermoplastique comprend un moule de maintien de semelle (17a), dans lequel est placée la dite semelle en caoutchouc vulcanisé, une paire d'anneaux ouvrants (52) et une forme (47) portant une empeigne.

11. Appareil suivant la revendication 8, caractérisé en ce que lesdits moyens de moulage (51) comprennent un demi-moule (51) prévu pour contenir ladite semelle et dans lequel ladite semelle est montée sur la tige (49) d'un piston (48) aligné avec ladite forme portant une empeigne (47), ledit piston (48) déterminant le positionnement exact du dit demi-moule (51) avec ladite semelle.

12. Appareil suivant la revendication 9, caractérisé en ce que ledit mécanisme inférieur (19) pour traiter ledit caoutchouc vulcanisable comprend une plaque porte-moule supérieure (21) rigidement associée à ladite plaque support (17), ladite plaque porte-moule supérieure (21) étant associée aux tiges (23) de deux pistons (24) dont le cylindre est rigidement associé à une plaque portemoule inférieure (22), lesdites tiges (23) servant également de colonnettes de guidage du mouvement.

13. Appareil suivant la revendication 12, caractérisé en ce que, entre le porte-moule supérieur (21) et le porte-moule inférieur (22), deux demi-moules (26,27) sont insérés pour former ladite semelle, des éléments chauffants (28,29) et des éléments isolants en forme de plaque (30,31) étant insérés de façon adjacente entre lesdits demi-moules (26,27) et les porte-moule respectifs (21,22).

14. Appareil suivant une ou plusieurs des revendications précédentes, caractérisé en ce que, dans le premier dispositif (3) pour l'injection de caoutchouc vulcanisable, qui comprend un distributeur à vis motorisé (33) traitant une bande de caoutchouc (35), il est prévu deux pinces (37,38) qui agissent entre la plaque portemoule supérieure (21) et la plaque porte-moule inférieure (22), lesdites deux pinces (37,38) étant actionnées par des pistons (24) de puissance adéquate, permettant d'engendrer une force de fermeture suffisante pour réagir aux pressions résultant de l'injection du caoutchouc vulcanisable.

15. Appareil suivant la revendication 8, caractérisé en ce que ledit carrousel (6) est adjacent à ladite table rotative (1) et dans une position sensiblement opposée à celle du premier dispositif (3) du caoutchouc vulcanisable, ledit carrousel (6) comprenant une chaîne mécanisée (7) qui supporte une pluralité de plateaux de réception (8) pour les semelles vulcanisées, le nombre de ces plateaux (8) étant identique au nombre de stations (2) de ladite machine, la vitesse de mouvement desdits plateaux (8) étant en synchronisme avec le mouvement de la table rotative (1).

16. Appareil suivant la revendication 15, caractérisé en ce que ladite chaîne (7) est au moins partiellement insérée dans un tunnel chauffé (9), une unité de traitement (10) étant prévue dans une région dudit tunnel (9) pour l'application d'un apprêt sur la face supérieure de la semelle.

17. Appareil suivant la revendication 8, caractérisé en ce que, entre ledit carrousel (6) et la dite table rotative (1), il est prévu deux manipulateurs, un premier manipulateur (11) comportant un bras et des moyens prévus pour extraire la semelle vulcanisée du moule de préparation, et un deuxième manipulateur (12) prévu pour réinsérer la semelle traitée avec ledit apprêt dans le mécanisme de moulage supérieur (18) avant d'injecter ladite matière thermoplastique.

**Patentansprüche**

1. Verfahren zur Herstellung von Schuhen mit Sohlen aus vulkanisiertem Kautschuk und Zwischensohlen aus thermoplastischem Material oder einem Zweikomponenten-Polyurethanmaterial unter Verwendung einer Vorrichtung mit einem rotierenden Tisch, umfassend die folgenden Schritte:

   a) Einspritzen von vulkanisierbarem Kautschuk in eine erste Form unter einer Hochdruckpresse;
   b) Geschlossenhalten der genannten ersten Form während der Vulkanisationszeit;
   c) Öffnen der genannten ersten Form, Herausnehmen der Sohle und ihre Behandlung mit einem Primer in einem Hilfskarussell, um so den Vorbehandlungsschritt durchzuführen und sie für das nachfolgende Kleben vorzubereiten;
   d) Einbringen der Sohle in eine zweite Form, die eine Form mit einem darin eingebrachten Schuhschaft aufweist;
   e) Einspritzen des genannten thermoplastischen Materials oder des genannten Zweikomponenten-Materials in die genannte zweite Form;
   f) Geschlossenhalten der genannten zweiten Form während der Reaktionszeit des Zweikomponenten-Polyurethanmaterials oder während der Abkühlzeit des genannten thermoplastischen Materials;

   wobei der Schritt des Einspritzens des vulkanisierbaren Kautschuks in die erste Form, der Schritt des Vorbehandelns auf dem Hilfskarussell und der Schritt des Einspritzens des thermoplastischen Materials oder des Zweikomponenten-Polyurethanmaterials bei der zweiten Form bei jedem Vorschubschritt des rotierenden Tisches stattfinden.

2. Verfahren nach Anspruch 1, dadurch gekennzeichnet, daß die Vulkanisationszeit bestimmt ist durch eine vorgegebene Zahl von schrittweisen Vorschüben des rotierenden Tisches.

3. Verfahren nach Anspruch 1, dadurch gekennzeichnet, daß der Schritt des Vorbehandelns an der oberen Fläche der genannten Sohle stattfindet.

4. Verfahren nach Anspruch 3, dadurch gekennzeichnet, daß der genannte Primer umfaßt:

   chlorierte Polymere 25 %
   Lösemittel auf Esterbasis 65 %
   Isocyanat 10 %.

5. Verfahren nach Anspruch 1, dadurch gekennzeichnet, daß die genannte mit dem genannten Primer behandelte Sohle in einem beheizten Tunnel gehalten wird bis sie in die zweite Form eingebracht wird, vor Erhalt des Zweikomponenten-Polyurethans oder des expandierbaren thermoplastischen Materials, das die Zwischensohle bilden wird.

6. Verfahren nach Anspruch 1, dadurch gekennzeichnet, daß das genannte thermoplastische Material ein Zweikomponenten-Polyurethan ist.

7. Verfahren nach Anspruch 1, dadurch gekennzeichnet, daß das genannte thermoplastische Material ein verschäumtes thermoplastisches Material ist.

8. Vorrichtung zur Herstellung von Schuhen mit Sohlen und Zwischensohlen umfassend:

   a) einen rotierenden Tisch (1), der an seiner Peripherie eine Vielzahl von Stationen (2) aufweist;
   b) eine erste Anordnung (3) zum Einspritzen eines Materials zur Bildung der Sohlen und
   c) eine zweite Anordnung (4) zum Einspritzen eines thermoplastischen Materials zur Bildung der Zwischensohlen,

   dadurch gekennzeichnet, daß der genannte rotierende Tisch an seiner Peripherie die genannte Vielzahl von Stationen (2) trägt, worin jede Station (2) der genannten Vielzahl von Stationen umfaßt:

8

- einen unteren Abschnitt (19) zur Behandlung von vulkanisiertem Kautschuk, wobei der genannte untere Abschnitt (19) Formvorrichtungen (26, 27) enthält, die mit Einrichtungen (24) zum Öffnen und Schließen versehen sind, wobei die genannte erste Anordnung (3) zum Einspritzen von vulkanisierbarem Kautschuk in die genannten Formvorrichtungen (26, 27) zur Bildung der genannten Sohlen geeignet ist; und

- einen oberen Abschnitt (18) zur Behandlung von thermoplastischem Material, wobei der genannte obere Abschnitt (18) weitere Formvorrichtungen (51) und weitere Einrichtungen (55, 56) zum Öffnen und Schließen enthält, wobei die genannte zweite Anordnung (4) zum Einspritzen des thermoplastischen Materials in die genannten weiteren Formvorrichtungen (51) zur Bildung der genannten Zwischensohlen geeignet ist;

und dadurch, daß ein Karussell (6) zum zeitweiligen Verweilen der genannten Sohle außen an den rotierenden Tisch (1) angordnet ist, wobei das genannte Karussell umfaßt:

- einen Manipulator (12) zum Herausnehmen der genannten Sohle aus den Formvorrichtungen (26, 27) des genannten unteren Abschnitts (19) und einen Manipulator (11) zum Einbringen der genannten Gummisohle in die weiteren Formvorrichtungen (51) des genannten oberen Abschnitts (18).

9. Vorrichtung nach Anspruch 8, dadurch gekennzeichnet, daß jede der genannten Stationen (2), die mit dem genannten rotierenden Tisch (1) verbunden ist, ein Plattenpaar (17) umfaßt, die in ihrem oberen Teil den genannten oberen Abschnitt (18) zum Einspritzen des genannten thermoplastischen Materials und im unteren Teil den genannten unteren Abschnitt (19) zum Einspritzen von vulkanisierbarem Kautschuk tragen.

10. Vorrichtung nach Anspruch 8, dadurch gekennzeichnet, daß der genannte obere Abschnitt (18) zum Behandeln des genannten thermoplastischen Materials eine Sohlenhalter-Form (17a), wo die genannte Sohle aus vulkanisiertem Kautschuk positioniert wird, ein Paar zu öffnende Ringe (52) und eine Form (47), die einen Schuhschaft trägt, umfaßt.

11. Vorrichtung nach Anspruch 8, dadurch gekennzeichnet, daß die genannten Formvorrichtungen (51) eine Halbform (51) enthalten, die geeignet ist, die genannte Sohle aufzunehmen, wobei die genannte Sohle auf den Schaft (49) eines Kolbens (48) aufgebracht wird, der mit der genannten Form (47), die einen Schuhschaft trägt, ausgerichtet ist, wobei der genannte Kolben (48) die exakte Positionierung der genannten Halbform (51) mit der genannten Sohle bestimmt.

12. Vorrichtung nach Anspruch 9, dadurch gekennzeichnet, daß der genannte untere Abschnitt (19) zum Behandeln des genannten vulkaniserbaren Kautschuks eine obere Formhalterplatte (21) umfaßt, die mit der genannten tragenden Platte (17) fest verbunden ist, wobei die genannte Formhalterplatte (21) dort mit den Schäften (23) von zwei Kolben (24) verbunden ist, deren Körper mit einer unteren Formhalterplatte (22) fest verbunden ist, wobei die genannten Schäfte (23) auch als Führungsstützen bei der Bewegung wirken.

13. Vorrichtung nach Anspruch 12, dadurch gekennzeichnet, daß zwischen dem oberen Formhalter (21) und dem unteren Formhalter (22) zwei Halbformen (26, 27) zur Bildung der genannten Sohle eingebracht sind, wobei Heizelemente (28, 29) und plattenähnliche Isolationselemente (30, 31) angrenzend zwischen die beiden genannten Halbformen (26, 27) und die entsprechenden Formhalter (21, 22) eingebracht sind.

14. Vorrichtung nach einem oder mehreren der vorhergehenden Ansprüche, dadurch gekennzeichnet, daß bei der ersten Anordnung (3) zum Einspritzen von vulkanisierbarem Kautschuk, die einen motorisierten Schneckenförderer (33) umfaßt, der einen Kautschukstreifen (35) verarbeitet, ein Paar Klammern (37, 38) vorhanden ist, das zwischen der oberen Formhalterplatte (21) und der unteren Formhalterplatte (22) wirkt, wobei das genannte Paar Klammern (37, 38) von hinreichend kräftigen Kolben (24) getrieben wird, die geeignet sind, eine ausreichende Schließkraft zu entwickeln, die geeignet ist, auf die Drücke zu reagieren, die durch Einspritzen des vulkanisierbaren Kautschuks entstehen.

15. Vorrichtung nach Anspruch 8, dadurch gekennzeichnet, daß das genannte Karussell (6) angrenzend an den genannten rotierenden Tisch (1) angeordnet ist und in einer Position im wesentlichen gegenüberliegend zu der ersten Anordnung (3) des vulkanisierbaren Kautschuks, wobei das genannte Karussell (6) eine mechanisierte Kette (7) umfaßt, die eine Vielzahl von ruhenden Böden (8) für die vulkanisierten Sohlen trägt, wobei die Anzahl der genannten Böden (8) identisch ist mit der Anzahl der Stationen (2) der genannten Maschine, wobei die Bewegungsgeschwindigkeit der genannten Böden (8) synchron ist mit der Bewegung des rotierenden Tisches (1).

16. Vorrichtung nach Anspruch 15, dadurch gekennzeichnet, daß die genannte Kette (7) mindestens teilweise in einen beheizten Tunnel (9) eingebracht ist, wobei in einem Abschnitt des genannten Tunnels (9) eine Behandlungseinheit (10) vorhanden ist zum Aufbringen von Primer auf die obere Fläche der Sohle.

17. Vorrichtung nach Anspruch 8, dadurch gekennzeichnet, daß zwischen dem genannten Karussell (6) und dem genannten rotierenden Tisch (1) zwei Manipulatoren vorhanden sind, wobei ein erster Manipulator (11) mit einem Arm versehen ist und mit Mitteln, die geeignet sind, die vulkanisierte Sohle aus der Herstellungsform herauszunehmen und ein zweiter Manipulator (12), der geeignet ist, die mit dem genannten Primer behandelte Sohle wieder in den oberen Formabschnitt (18) einzubringen, bevor das genannte thermoplastische Material eingespritzt wird.

Fig. 1

Fig.2

EP 0 270 047 B1

Fig. 3